# EUROPEAN PATENT APPLICATION

(11) **EP 4 717 667 A1**
(43) Date of publication of application: **01.04.2026**
(21) Application number: 23945228.7
(22) Date of filing: 07.11.2023
(51) Int. Cl.: C01B 21/086, C01B 21/093, H01M 10/0568

(54) **FLUOROSULFONYLIMIDE SALT AND PREPARATION METHOD THEREFOR**

(30) Priority: 12.07.2023 KR 20230090232
(71) Applicant: EP CHEMTECH CO., LTD., Chungcheongbuk-do 27651 (KR)
(72) Inventor: LEE, Sung Kwun, Ansan-si Gyeonggi-do 15539 (KR); LEE, Soon Ho, Gunsan-si Jeollabuk-do 54082 (KR); LEE, Hee Jin, Gunsan-si Jeollabuk-do 54104 (KR); HA, Jae Seong, Gunsan-si Jeollabuk-do 54103 (KR)
(74) Representative: Nederlandsch Octrooibureau
(86) International application number: PCT/KR2023/017732
(87) International publication number: WO 2025/013999

(57) **Abstract**

A fluorosulfonylimide salt is disclosed. This fluorosulfonylimide salt represented by chemical formula (Ib) of the present invention contains at least one of an impurity represented by chemical formula (IIb), [NS₂O₅F]²⁻, and an impurity represented by chemical formula (IIIb), [NS₂O₆]³⁻, wherein the content of [NS₂O₅F]²⁻ is 10,000 ppm or less, and the content of [NS₂O₆]³⁻ is 10,000 ppm or less (in chemical formula (Ib), M2 is one of Li, Na, K, Ca, Mg, Zn, Sb, Rb, and Cs; and A1 is a fluorine atom, or an alkyl group having 1 to 6 carbon atoms in which at least one hydrogen atom is substituted with a fluorine atom).... chemical formula (Ib) ... chemical formula (IIb) ... chemical formula (IIIb) The fluorosulfonylimide salt according to the present invention can reduce the corrosion of electrolytes, additives, and current collectors.

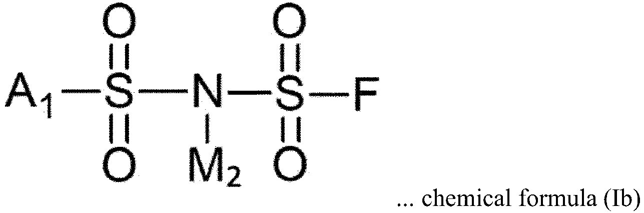

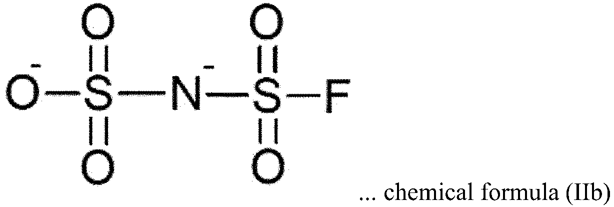

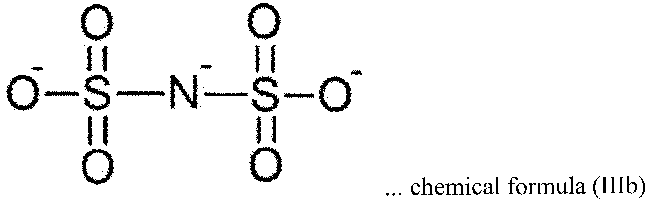

## Description

### CROSS-REFERENCE TO RELATED APPLICATIONS

This application is a National Phase Application of PCT International Application No. PCT/KR2023/017732, which was filed on November 7, 2023, and which claims priority from Korean Patent Application No. 10-2023-0090232 filed with the Korean Intellectual Property Office on July 12, 2023. The disclosures of the above patent applications are incorporated herein by reference in their entirety.

### TECHNICAL FIELD

The invention relates to a fluorosulfonylimide salt and a method for preparing the same, more particularly to a fluorosulfonylimide salt and a method for preparing the same in which impurities are removed by the addition of a chlorination reagent.

### BACKGROUND ART

Fluorosulfonylimide salts (e.g., fluorosulfonylimide alkali metal salts, etc.) are compounds used for various purposes and are used as electrolytes, especially in lithium secondary batteries, and as fuel cell electrolytes, selective electrophilic fluorinating agents, and infrared absorbing pigments, among others.

Conventional methods for preparing fluorosulfonylimide salts involve applying halogen exchange to chlorosulfonylimide. For example, a method widely applied in the industry for preparing a lithium bis(fluorosulfonyl)imide salt includes reacting chlorosulfonyl isocyanate with chlorosulfonic acid to prepare bis(chlorosulfonyl)imide and then performing a halogen exchange reaction on the bis(chlorosulfonyl)imide.

However, the lithium bis(fluorosulfonyl)imide salt prepared in this manner is slightly acidic and thus may corrode the electrolyte, additives, and current collectors.

As a result of research into why the lithium bis(fluorosulfonyl)imide salt corrodes the electrolyte, additives, and current collectors, it was observed that ions containing a sulfonic acid group (-SO₃H) or a sulfonate salt (-SO₃M) are present in the lithium bis(fluorosulfonyl)imide salt and that these ions cause the corrosion of the electrolyte, additives, and current collectors by either releasing hydrogen ions in the electrolyte or by decomposing the electrolyte and additives to produce hydrofluoric acid.

### DETAILED DESCRIPTION OF THE INVENTION

### Technical Problem

An aspect of the invention, which was conceived to resolve the problem described above, is to provide a fluorosulfonylimide salt, and a method for preparing the same, which can reduce the corrosion of the electrolyte, additives, and current collectors.

Another aspect of the invention is to provide bis(chlorosulfonyl)imide and a method for preparing bis(chlorosulfonyl)imide, which is an intermediate for preparing the fluorosulfonylimide salt, such that the amount of impurities is reduced.

Yet another aspect of the invention is to provide fluorosulfonylimide and a method for preparing fluorosulfonylimide, which is an intermediate for preparing the fluorosulfonylimide salt, such that the amount of impurities is reduced.

Other objectives of the invention will be more clearly understood from the embodiments set forth below.

### Technical Solution

A bis(chlorosulfonyl)imide according to one aspect of the invention contains at least one of an impurity H₂O₅NClS₂ expressed as chemical formula (IIa) below in an amount of 10,000 ppm or lower and an impurity H₃O₆NS₂ expressed as chemical formula (IIIa) below in an amount of 10,000 ppm or lower:

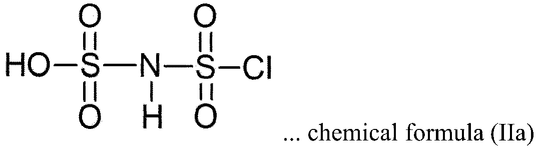

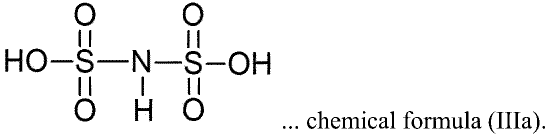

Here, as a chlorination reagent is added during the preparation of the bis(chlorosulfonyl)imide, the amount of the H₂O₅NClS₂ can become 10,000 ppm or lower and the amount of the H₃O₆NS₂ can become 10,000 ppm or lower.

Here, the amount of the H₂O₅NClS₂ can be 7,100 ppm or lower, and the amount of the H₃O₆NS₂ can be 6,700ppm or lower.

Here, the chlorination reagent can be at least one compound selected from SOCl₂, SO₂Cl₂, COCl₂, C₂O₂Cl₂, POCl₃, PCl₅, SbCl₃, ClSO₂NCO, SO₂(NCO)₂, SiCl₄, ICl, ICl₃, S₂Cl₂, SCl₂, PCl₃, COCl₂, and C₆H₅CCl₃.

A fluorosulfonylimide expressed as chemical formula (Ia) according to another aspect of the invention contains at least one of an impurity [NS₂O₅F]²⁻ expressed as chemical formula (IIb) below and an impurity [NS₂O₆]³⁻ expressed as chemical formula (IIIb) below, wherein the adding of a chlorination reagent during preparation causes the amount of the [NS₂O₅F]²⁻ to become 10,000 ppm or lower and the amount of the [NS₂O₆]³⁻ to become 10,000 ppm or lower. 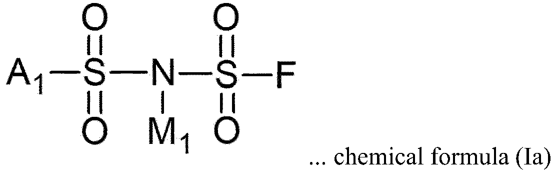 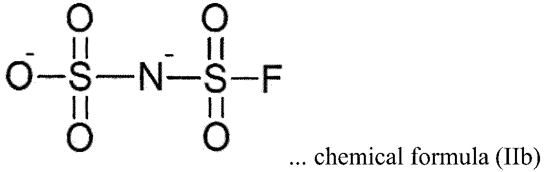 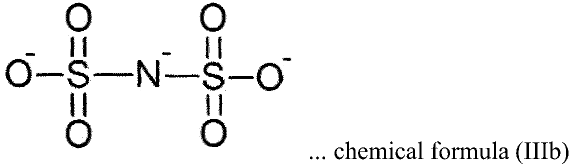 (In the chemical formula (Ia) above, M1 is H, and A1 is a fluoride atom or an alkyl group having a carbon number of 1 to 6 in which one or more hydrogen atom is substituted with a fluorine atom.)

Here, the amount of the [NS₂O₅F]²⁻ can be 7,100 ppm or lower, and the amount of the [NS₂O₆]³⁻ can be 6,700 ppm or lower.

A fluorosulfonylimide salt expressed as chemical formula (Ia) according to still another aspect of the invention contains at least one of an impurity [NS₂O₅F]²⁻ expressed as chemical formula (IIb) below and an impurity [NS₂O₆]³⁻ expressed as chemical formula (IIIb) below, wherein the adding of a chlorination reagent during preparation causes the amount of the [NS₂O₅F]²⁻ to become 10,000 ppm or lower and the amount of the [NS₂O₆]³⁻ to become 10,000 ppm or lower. 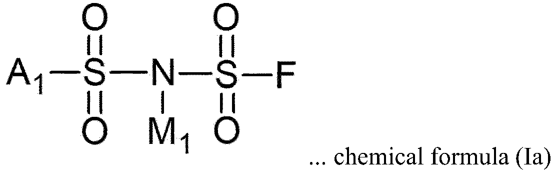 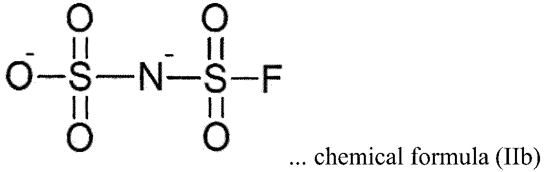 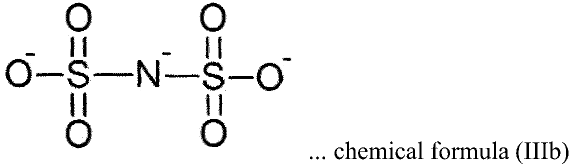 (In the chemical formula (Ia) above, M1 is any one of NH4, Li, Na, K, Ca, Mg, Zn, Sb, Rb, and Cs, and A1 is a fluoride atom or an alkyl group having a carbon number of 1 to 6 in which one or more hydrogen atom is substituted with a fluorine atom.)

Here, the amount of the [NS₂O₅F]²⁻ can be 7,100 ppm or lower, and the amount of the [NS₂O₆]³⁻ can be 6,700 ppm or lower.

A fluorosulfonylimide salt expressed as chemical formula (Ib) according to yet another aspect of the invention contains at least one of an impurity [NS₂O₅F]²⁻ expressed as chemical formula (IIb) below and an impurity [NS₂O₆]³⁻ expressed as chemical formula (IIIb) below, wherein the amount of the [NS₂O₅F]²⁻ is 10,000 ppm or lower and the amount of the [NS₂O₆]³⁻ is 10,000 ppm or lower. 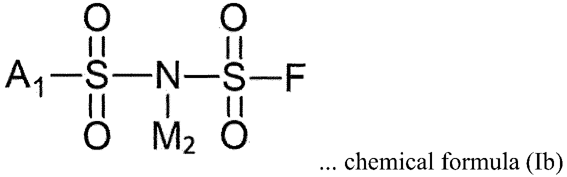 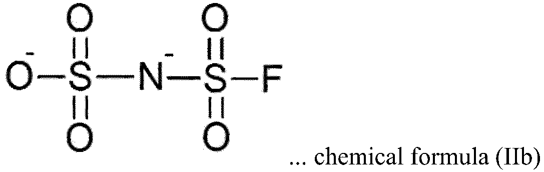 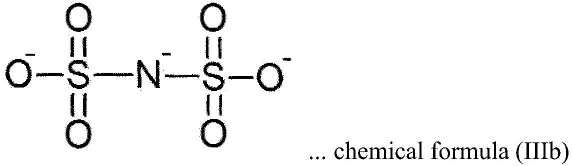 (In the chemical formula (Ib) above, M2 is any one of Li, Na, K, Ca, Mg, Zn, Sb, Rb, and Cs, and A1 is a fluoride atom or an alkyl group having a carbon number of 1 to 6 in which one or more hydrogen atom is substituted with a fluorine atom.)

Here, the amount of the [NS₂O₅F]²⁻ can be 7,100 ppm or lower, and the amount of the [NS₂O₆]³⁻ can be 6,700 ppm or lower.

Here, the amount of the [NS₂O₅F]²⁻ can be 6,300 ppm or lower, and the amount of the [NS₂O₆]³⁻ can be 5,200 ppm or lower.

Here, the amount of the [NS₂O₅F]²⁻ can be 289 ppm or lower, and the amount of the [NS₂O₆]³⁻ can be 325 ppm or lower.

Here, the amount of the [NS₂O₅F]²⁻ can be 187 ppm or lower, and the amount of the [NS₂O₆]³⁻ can be 124 ppm or lower.

Here, the fluorosulfonylimide salt can have a pH of 6 or higher and 9 or lower in an aqueous state.

An electrolyte according to still another aspect of the invention includes the fluorosulfonylimide or the fluorosulfonylimide salt described above.

An electrochemical device according to yet another aspect of the invention includes the electrolyte described above.

A method of preparing bis(chlorosulfonyl)imide according to still another aspect of the invention includes: reacting chlorosulfonyl isocyanate with chlorosulfonic acid; and adding a chlorination reagent to a product of the reaction.

Here, the product of the reaction can contain at least one of an impurity H₂O₅NClS₂ expressed as chemical formula (IIa) below and an impurity H₃O₆NS₂ expressed as chemical formula (IIIa) below, wherein the adding of the chlorination reagent can include removing impurities contained in the product of the reaction.

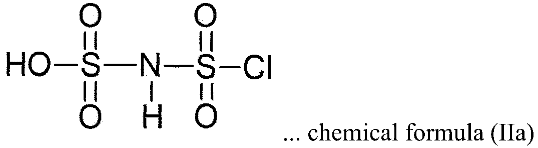

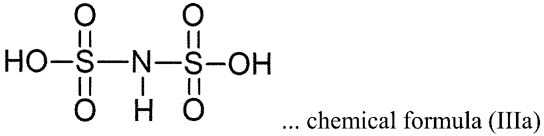

Here, as a result of the removing of the impurities, the H₂O₅NClS₂ can remain in an amount of 10,000 ppm or lower and the H₃O₆NS₂ can remain in an amount of 10,000 ppm or lower in the bis(chlorosulfonyl)imide.

Here, as a result of the removing of the impurities, the H₂O₅NClS₂ can remain in an amount of 7,100 ppm or lower and the H₃O₆NS₂ can remain in an amount of 6,700 ppm or lower in the bis(chlorosulfonyl)imide.

Here, the chlorination reagent can be at least one compound selected from SOCl₂, SO₂Cl₂, COCl2, C₂O₂Cl₂, POCl₃, PCl₅, SbCl₃, ClSO₂NCO, SO₂(NCO)₂, SiCl₄, ICl, ICl₃, S₂Cl₂, SCl₂, PCl₃, COCl₂, and C₆H₅CCl₃.

A method of preparing a fluorosulfonylimide salt expressed as chemical formula (Ia) according to yet another aspect of the invention includes: obtaining bis(chlorosulfonyl)imide containing at least one of impurities H₂O₅NClS₂ and H₃O₆NS₂ by reacting chlorosulfonyl isocyanate with chlorosulfonic acid; removing the impurities by adding a chlorination reagent to the bis(chlorosulfonyl)imide; and adding butyl acetate to a fluorine compound and stirring, and then adding the bis(chlorosulfonyl)imide from which the impurities have been removed. 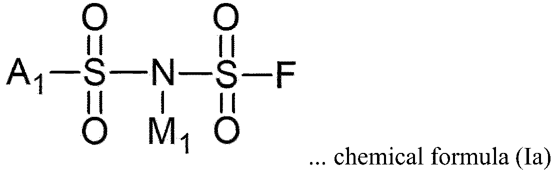 (In the chemical formula (Ia) above, M1 is any one of NH4, Li, Na, K, Ca, Mg, Zn, Sb, Rb, and Cs, and A1 is a fluoride atom.)

A method of preparing a bis(fluorosulfonyl)imide salt according to still another aspect of the invention includes: obtaining bis(chlorosulfonyl)imide containing at least one of impurities H₂O₅NClS₂ expressed as chemical formula (IIa) below and H₃O₆NS₂ expressed as chemical formula (IIIa) below by reacting chlorosulfonyl isocyanate with chlorosulfonic acid; removing the impurities by adding a chlorination reagent to the bis(chlorosulfonyl)imide; obtaining an ammonium bis(fluorosulfonyl)imide salt from the bis(chlorosulfonyl)imide from which the impurities have been removed; and obtaining a bis(chlorosulfonyl)imide salt expressed as chemical formula (Ib) below from the obtained ammonium bis(fluorosulfonyl)imide. 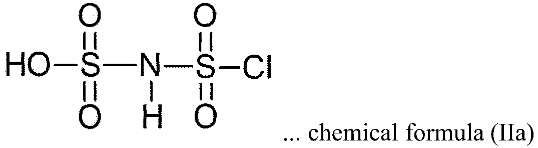 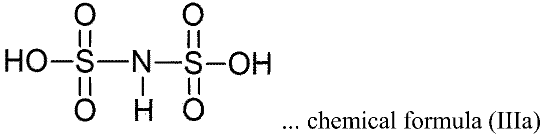 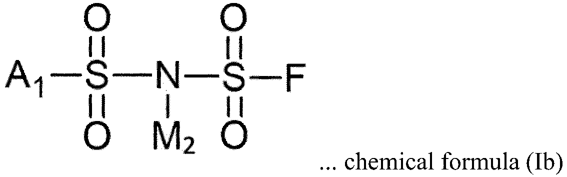
(In the chemical formula (Ib) above, M2 is any one of Li, Na, K, Ca, Mg, Zn, Sb, Rb, and Cs, and
A1 is a fluoride atom.)

Here, the obtained bis(fluorosulfonyl)imide salt can contain at least one of an impurity [NS₂O₅F]²⁻ expressed as chemical formula (IIb) below and an impurity [NS₂O₆]³⁻ expressed as chemical formula (IIIb) below, wherein an amount of the [NS₂O₅F]²⁻ can be 10,000 ppm or lower and an amount of the [NS₂O₆]³⁻ can be 10,000 ppm or lower.

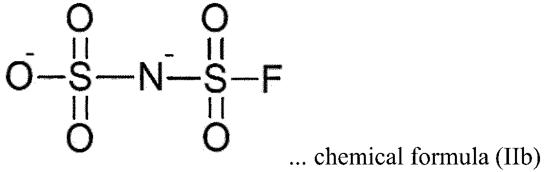

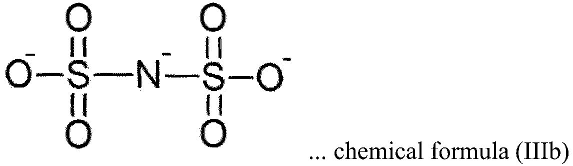

Here, the amount of the [NS₂O₅F]²⁻ can be 7,100 ppm or lower, and the amount of the [NS₂O₆]³⁻ can be 6,700 ppm or lower.

Here, the bis(fluorosulfonyl)imide salt can have a pH of 6 or higher and 9 or lower in an aqueous state.

Here, the chlorination reagent can be at least compound selected from SOCl₂, SO₂Cl₂, COCl₂, C₂O₂Cl₂, POCl₃, PCl₅, SbCl₃, ClSO₂NCO, SO₂(NCO)₂, SiCl₄, ICl, ICl₃, S₂Cl₂, SCl₂, PCl₃, COCl₂, and C₆H₅CCl₃.

### Advantageous Effects

A fluorosulfonylimide salt based on an embodiment of the invention can reduce the corrosion of the electrolyte, additives, and current collectors.

Also, an embodiment of the invention can reduce impurities in preparing bis(chlorosulfonyl)imide, which is an intermediate for preparing bis(fluorosulfonyl)imide, and in preparing bis(fluorosulfonyl)imide.

### MODE FOR CARRYING OUT THE INVENTION

As the invention allows for various changes and numerous embodiments, particular embodiments will be illustrated in the drawings and described in detail in the written description. However, this is not intended to limit the invention to particular modes of practice, and it is to be appreciated that all changes, equivalents, and substitutes that do not depart from the spirit and technical scope of the invention are encompassed by the invention. In the description of the invention, certain detailed explanations of the related art are omitted if it is deemed that they may unnecessarily obscure the essence of the invention.

While such terms as "first" and "second," etc., can be used to describe various components, such components are not to be limited by the above terms. The above terms are used only to distinguish one component from another.

The terms used in the present specification are merely used to describe particular embodiments and are not intended to limit the invention. An expression used in the singular encompasses the expression of the plural, unless it has a clearly different meaning in the context. In the present specification, it is to be understood that terms such as "including" or "having," etc., are intended to indicate the existence of the features, numbers, steps, actions, components, parts, or combinations thereof disclosed in the specification and are not intended to preclude the possibility that one or more other features, numbers, steps, actions, components, parts, or combinations thereof may exist or may be added. Certain embodiments of the invention will be described below in more detail.

A method of preparing bis(chlorosulfonyl)imide according to an embodiment of the invention is characterized by including a step of adding a chlorination reagent. More specifically, the method is characterized by using a chlorination reagent to remove at least one of impurity 1a and impurity 2a, which are produced during the preparation of bis(chlorosulfonyl)imide represented by reaction formula (I) shown below. Here, the term "remove" can mean removing a substance to the extent that the miniscule amount remaining of the substance is not detectable by a measurement apparatus. For example, the amount remaining may be 1 ppm or lower, 3 ppm or lower, 10 ppm or lower, or 100 ppm or lower. On the other hand, the term "remove" can mean removing a substance to the extent that the negative impact of the substance in a secondary battery is minimized. For example, the amount remaining may be 1000 ppm or lower, 3000 ppm or lower, 5000 ppm or lower, or 10000 ppm or lower.

The removal by a chlorination reagent can be performed according to reaction formula (IIa) and reaction formula (IIb) shown below.

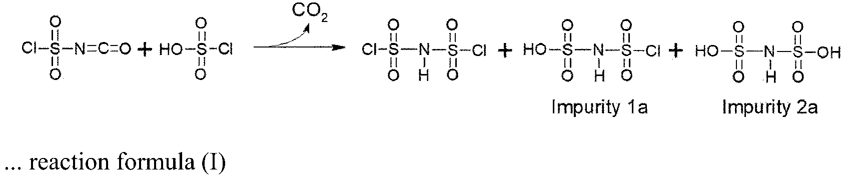

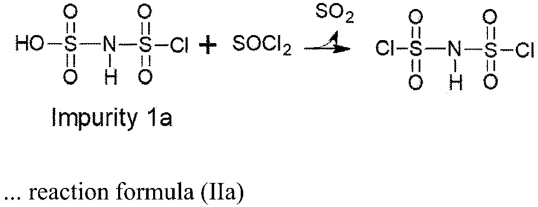

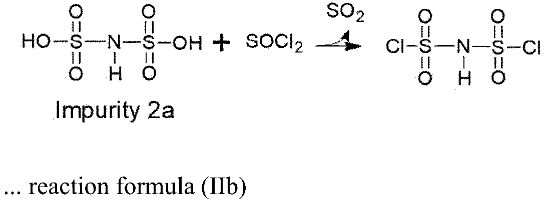

A fluorosulfonylimide salt is a material used in the electrolyte, which is a core constituent material of a secondary battery, and has the advantage of having a higher decomposition temperature than LiPF6, the electrolyte commonly used in the related art. A representative example of a fluorosulfonylimide salt is lithium bis(fluorosulfonyl)imide, which is represented by chemical formula (IV).

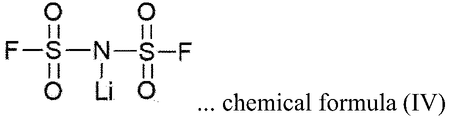

The conventional process for preparing a fluorosulfonylimide salt mainly includes three process steps. Step 1 may be a process for preparing chlorosulfonylimide from raw materials, step 2 may be a process for substituting chlorine with fluorine by adding ammonium fluoride, and step 3 may be a process for substituting the ammonium ion with an alkali metal ion.

### [Step 1 Process]

The process for step 1 can be the process represented in reaction formula (I) for preparing chlorosulfonylimide from raw materials. Here, the raw materials can include chlorosulfonyl isocyanate and chlorosulfonic acid.

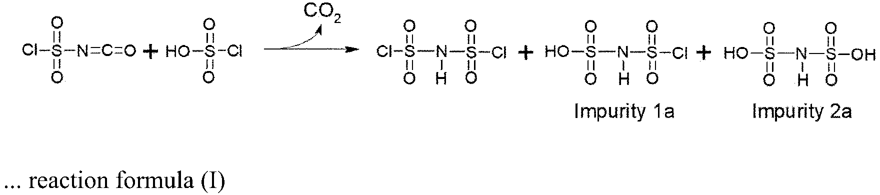

Here, at least one of H₂O₅NClS₂, expressed as chemical formula (IIa) below, and H₃O₆NS₂, expressed as chemical formula (IIIa) below, can be produced as impurities. The amounts of H₂O₅NClS₂ and H₃O₆NS₂ produced as impurities may be greater than or equal to 10,000 ppm each or combined.

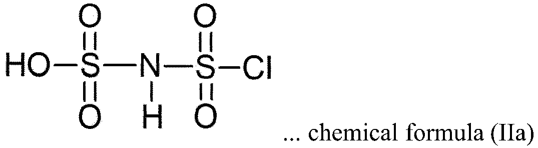

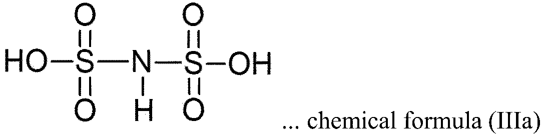

The process for step 2 can be a step of adding and reacting ammonium fluoride (NH₄F) to and with the product of the step 1 process. More specifically, the process can include a step of mixing the ammonium fluoride with a solvent and then adding the product of the step 1 process. Here, the solvent can preferably include one of or two or more of toluene, haloalkane-based, nitrile-based, ether-based, alcohol-based, ester-based, and carbonate-based solvents, etc. Specifically, the solvent can be dimethoxyethane, ethyl acetate, butyl acetate, toluene, chloroform, dichloromethane, dichloroethane, tetrahydrofuran, acetonitrile, and the like. After the step of reacting the ammonium fluoride with the product of the step 1 process is complete, a step of adding a non-polar solvent to recrystallize the product of the step 2 process may further be included. The product of the step 1 process may be bis(chlorosulfonyl)imide containing the impurities, and the product of the step 2 process may be the ammonium salt of bis(fluorosulfonyl)imide.

The product of the step 1 process may include at least one of H₂O₅NClS₂ and H₃O₆NS₂ as impurities. These impurities can be converted in the step 2 process according to reaction formula (III) shown below into at least one of HO₅NFS₂⁻, expressed as chemical formula (1b), H₂O₆NS₂⁻, expressed as chemical formula (2b), O₅NFS₂²⁻, expressed as chemical formula (3b), and O₆NS₂³⁻, expressed as chemical formula (4b). More specifically, impurity 1a expressed as chemical formula (IIa) can react with ammonium fluoride in the step 2 process to form impurity 1b and impurity 3b. Similarly, impurity 2a expressed as chemical formula (IIIa) can react with ammonium fluoride in the step 2 process to form impurity 2b and impurity 4b.

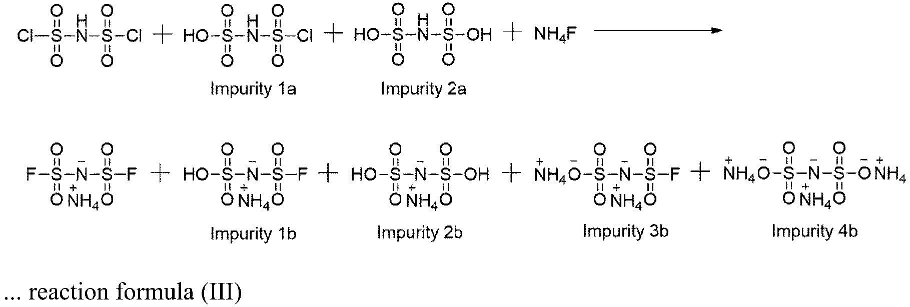

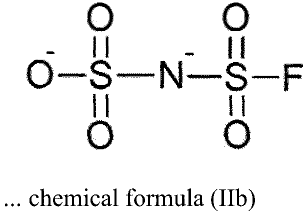

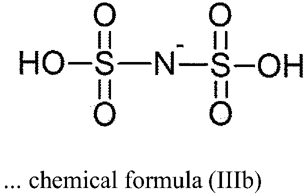

The process for step 3 can be a step of adding a metal compound to the product of the step 2 process. Here, the metal compound may be a hydroxide. More specifically, the process can include mixing a hydroxide of a metal compound with a solvent and then adding the product of the step 2 process. The metal in the metal compound may be Li, Na, K, Ca, Mg, Zn, Sb, Rb, or Cs. Here, the solvent may preferably be one of or two or more of toluene, haloalkane-based, nitrile-based, ether-based, alcohol-based, ester-based, carbonate-based solvents, etc. Specifically, the solvent may include isopropyl ether, dimethoxyethane, ethyl acetate, butyl acetate, toluene, chloroform, dichloromethane, dichloroethane, tetrahydrofuran, acetonitrile, and the like. Here, NH₃ gas is produced as the reaction progresses, and whether or not the reaction has been completed can be determined from the ceasing of NH₃ gas production. Furthermore, after the step of adding and reacting the metal compound to and with the product of the step 2 process, a step of adding a non-polar solvent EDC for recrystallization may further be included.

The impurities 1b, 2b, 3b, and 4b included in the product of the step 2 process can participate in the reaction in the step 3 process as shown in reaction formula (IV) below, to produce impurity 1c, impurity 2c, impurity 3c, impurity 4c, and impurity 5c. 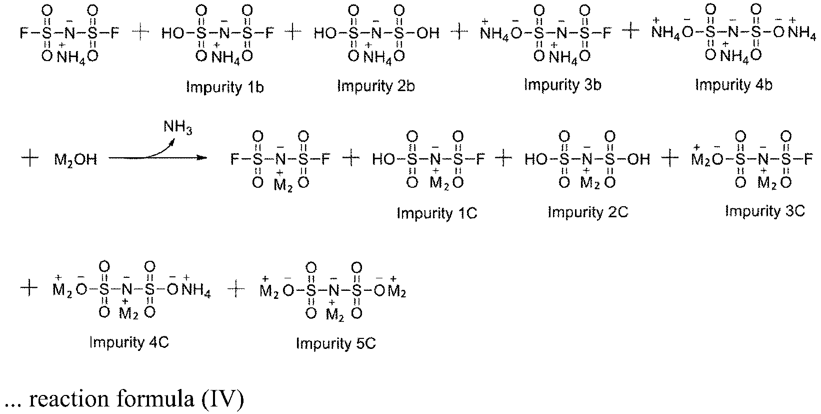 (In reaction formula (IV) above, M₂ is an element selected from Li, Na, K, Ca, Mg, Zn, Sb, Rb, and Cs.)

Summarizing the processes of step 1 to step 3 above, in preparing a bis(fluorosulfonyl)imide salt, the impurities produced in the step 1 process may participate in the reactions of the step 2 and step 3 processes, so that ultimately at least one of impurity 1c, impurity 2c, impurity 3c, impurity 4c, and impurity 5c may be formed remaining in the bis(fluorosulfonyl)imide salt.

When the bis(fluorosulfonyl)imide salt containing at least one of impurities 1c, 2c, 3c, 4c and 5c is added as a salt in the electrolyte of a lithium secondary battery, hydrogen ions are released instead of hydrogen metal ions due to the sulfonic acid group (-SO₃H), as shown in reaction formula (V) and reaction formulas (VI) below, and this can incur the following problems. Firstly, there can be a decomposition of the electrolyte and electrolyte additives. In a lithium secondary battery, an organic solvent such as ethylene carbonate is mainly used for the electrolyte, and an organic compound such as fluoroethylene carbonate is mainly used for the additives. These organic compounds are vulnerable to acid and can be easily decomposed, especially when the charging and discharging of a battery increases the temperature and increases the reactivity with the acid. Secondly, there can be a corrosion of the anode and cathode current collectors. The hydrogen ions released from the sulfonic acid group can directly react with the anode and cathode current collectors, causing corrosion and generating hydrogen gas, which can lead to an inflating of the battery. Furthermore, the sulfonate salt (-SO₃M), similar to moisture inside the battery, may act to decompose the electrolyte and additives and thus reduce battery efficiency, and the byproduct generated at this time, i.e., hydrofluoric acid, may degrade battery life by corroding the anode and cathode current collectors.

### <Step 1 Method>

A method of preparing bis(chlorosulfonyl)imide according to an embodiment of the invention can include a step of reacting chlorosulfonyl isocyanate (OCNSO₂Cl) with chlorosulfonic acid (ClSO₃H); and a step of adding a chlorination reagent to the product of the above reaction.

Here, the reaction temperature in the step of reacting the chlorosulfonyl isocyanate (OCNSO₂Cl) with the chlorosulfonic acid (ClSO₃H) can be higher than or equal to 100 °C and lower than 150 °C. Preferably, the reaction temperature can be higher than or equal to 125 °C and lower than 135 °C. The step of reacting the chlorosulfonyl isocyanate with the chlorosulfonic acid can be performed until the production of carbon dioxide gas is ceased. This is because the ceasing of carbon dioxide gas production can be regarded as indicating the completion of the reaction, since carbon dioxide gas is produced in the step of reacting the chlorosulfonyl isocyanate with the chlorosulfonic acid.

When chlorosulfonyl isocyanate is reacted with chlorosulfonic acid, at least one of impurity 1a and impurity 2a represented in reaction formula (I) may be produced in addition to the bis(chlorosulfonyl)imide. Impurity 1a may be H₂O₅NClS₂, expressed as chemical formula (IIa) below, and impurity 2a may be H₃O₆NS₂, expressed as chemical formula (IIIa) below. The amounts of H₂O₅NClS₂ and H₃O₆NS₂ produced as impurities may be greater than or equal to 10,000 ppm each or combined.

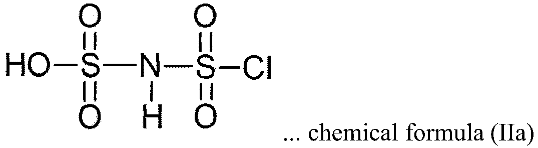

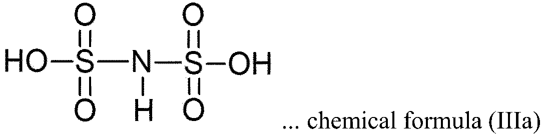

### <Step 1 Method>

Here, the step of adding the chlorination reagent can be a step of removing the H₂O₅NClS₂ expressed as chemical formula (IIa) above and H₃O₆NS₂ expressed as chemical formula (IIIa) above, which are impurities included in the product of the above reaction.

The amount in which the chlorination reagent is added can be determined by the amount in which the chlorosulfonyl isocyanate is added. More specifically, the amount in which the chlorination reagent is added can be from 1/8 to 1/20 of the molecular number of the chlorosulfonyl isocyanate. The amount can preferably be from 1/9 to 1/15 and more preferably be 1/10.

Regarding the step of adding the chlorination reagent, the reason for adding the chlorination reagent is described below with reference to reaction formula (I), reaction formula (IIa), and reaction formula (IIb) shown below.

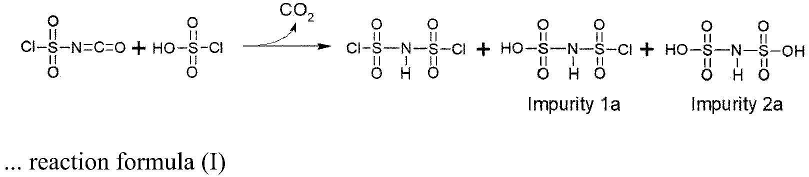

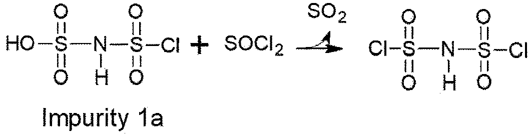

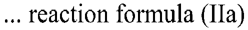

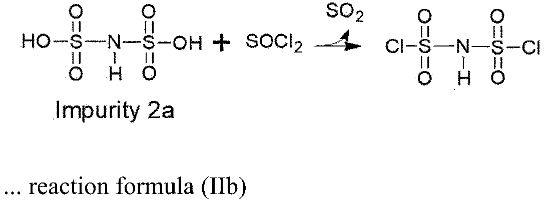

Reaction formula (I) is not written with correct stoichiometric ratios but rather is written to show that impurity 1 and impurity 2 are obtained as the reaction products. Similarly, reaction formula (IIa) and reaction formula (IIb) are likewise not written with correct stoichiometric ratios but rather are written to show that impurity 1 and impurity 2 are removed as a result of adding the chlorination reagent.

The H₂O₅NClS₂ and the H₃O₆NS₂ can at least partially be removed by the chlorination reagent. The chlorination reagent can be at least one compound selected from SOCl₂, SO₂Cl₂, COCl₂, C₂O₂Cl₂, POCl₃, PCl₅, SbCl₃, ClSO₂NCO, SO₂(NCO)₂, SiCl₄, ICl, ICl₃, S₂Cl₂, SCl₂, PCl₃, COCl₂, and C₆H₅CCl₃. When
When a chlorination reaction occurs due to the addition of the chlorination reagent, the sulfonic acid group (-SO₃H) in the H₂O₅NClS₂ and the H₃O₆NS₂ can be converted into a chlorosulfonyl group (-SO₂Cl), and the H₂O₅NClS₂ and the H₃O₆NS₂ can be converted into bis(chlorosulfonyl)imide.

### <Step 1 Method>

A method of preparing bis(chlorosulfonyl)imide according to an embodiment of the invention is characterized in that, as a result of removing the H₂O₅NClS₂ and H₃O₆NS₂, the amounts of H₂O₅NClS₂ and H₃O₆NS₂ remaining in the bis(chlorosulfonyl)imide are 10,000 ppm or lower each. Further, the amounts of the remaining H₂O₅NClS₂ and H₃O₆NS₂ can be 7,100 ppm or lower and 6,700 ppm or lower, respectively. Further, the amounts of the remaining H₂O₅NClS₂ and H₃O₆NS₂ can be 6,300 ppm or lower and 5,200 ppm or lower, respectively. Further, the amounts of the remaining H₂O₅NClS₂ and H₃O₆NS₂ can be 289 ppm or lower and 325 ppm or lower, respectively. Further, the amounts of the remaining H₂O₅NClS₂ and H₃O₆NS₂ can be 187 ppm or lower and 124 ppm or lower, respectively.

### <Step 2 Method>

According to another aspect of the invention, the invention can provide a method of preparing a fluorosulfonylimide salt expressed as chemical formula (Ia), where the method includes a step of obtaining bis(chlorosulfonyl)imide containing at least one of H₂O₅NClS₂ and H₃O₆NS₂ as impurities by reacting chlorosulfonyl isocyanate and chlorosulfonic acid; a step of removing the impurities by adding a chlorination reagent to the bis(chlorosulfonyl)imide; and a step off adding butyl acetate to a fluorine compound, stirring, and adding the bis(chlorosulfonyl)imide from which the impurities have been removed.

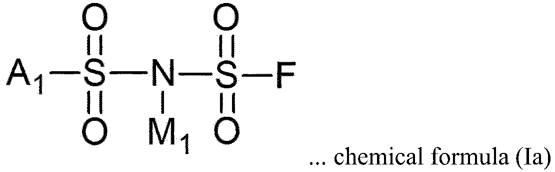

Here, A₁ can be a fluorine atom.

Here, the chlorination reagent can be at least one compound selected from SOCl₂, SO₂Cl₂, COCl2, C₂O₂Cl₂, POCl₃, PCl₅, SbCl₃, ClSO₂NCO, SO₂(NCO)₂, SiCl₄, ICl, ICl₃, S₂Cl₂, SCl₂, PCl₃, COCl₂, and C₆H₅CCl₃.

Also, the fluorine compound can be any compound selected from HF, NH₄F, LiF, NaF, KF, CaF₂, MgF₂, ZnF₂, SbF₃, RbF, and CsF. Accordingly, M₁ in the chemical formula (Ia) above can be any one of H, NH4, Li, Na, K, Ca, Mg, Zn, Sb, Rb, and Cs.

However, for the sake of convenience, the following descriptions use an example in which A₁ is a fluorine atom and the fluorine compound is ammonium fluoride (NH₄F), whereby the fluorosulfonylimide salt thus prepared would be ammonium bis(fluorosulfonyl)imide.

If the impurities are removed by the addition of the chlorination reagent to the bis(chlorosulfonyl)imide, the amount of impurities remaining in the ammonium bis(fluorosulfonyl)imide ultimately prepared would also be decreased.

The step of adding butyl acetate to the ammonium fluoride and stirring can be performed with temperature cooled to -5 °C or lower. Also, the stirring step can be performed by way of a magnetic stirrer.

The step of adding the bis(chlorosulfonyl)imide from which impurities have been removed can be performed for 40 minutes or longer and 80 minutes or shorter with the temperature kept at 0 °C or higher and 15 °C or lower. This is because adding the bis(chlorosulfonyl)imide triggers an exothermic reaction.

After the exothermic reaction is finished, the reaction can be continued for four hours or longer and 6 hours or shorter with the temperature raised to 60 °C or higher and 100 °C or lower.

After the reaction with increased temperature is finished, a step of lowering the temperature to 15 °C or higher and 35 °C or lower, removing solid impurities by way of filtering, concentrating the filtrate, and adding the non-polar solvent of toluene for recrystallization can be performed.

As presented in reaction formula (III) above, the H₂O₅NClS₂ and the H₃O₆NS₂, which are impurities remaining in the product of the step 1 process, can be converted by the step 2 process as in reaction formula (III) below into at least one of HO₅NFS₂⁻, expressed as chemical formula (1b) below, H₂O₆NS₂⁻, expressed as chemical formula (2b) below, O₅NFS₂²⁻, expressed as chemical formula (3b) below, and O₆NS₂³⁻, expressed as chemical formula (4b) below. More specifically, impurity 1a expressed as chemical formula (IIa) can react with ammonium fluoride in the step 2 process to form impurity 1b and impurity 3b. Similarly, impurity 2a expressed as chemical formula (IIIa) can react with ammonium fluoride in the step 2 process to form impurity 2b and impurity 4b.

The total amount of impurity 1b and impurity 3b can be 10,000 ppm or lower, 7,100 ppm or lower, 6,300 ppm or lower, 289 ppm or lower, or 187 ppm or lower. Here, the total amount of impurity 1b and impurity 3b can be measured in the form of [NS₂O₅F]²⁻.

Also, the total amount of impurity 2b and impurity 4b can be 10,000 ppm or lower, 6,700 ppm or lower, 5,200 ppm or lower, 325 ppm or lower, or 124 ppm or lower. Here, the total amount of impurity 2b and impurity 4b can be measured in the form of [NS₂O₆]³⁻.

### <Step 3 Method>

A method of preparing a bis(fluorosulfonyl)imide salt according to another aspect of the invention can include: a step of obtaining bis(chlorosulfonyl)imide that contains as impurities at least one of H₂O₅NClS₂, expressed as chemical formula (IIa) below, and H₃O₆NS₂, expressed as chemical formula (IIIa) below by reacting chlorosulfonyl isocyanate and chlorosulfonic acid; a step of removing the impurities by adding a chlorination reagent to the bis(chlorosulfonyl)imide; a step of obtaining an ammonium bis(fluorosulfonyl)imide salt from the bis(chlorosulfonyl)imide from which the impurities have been removed; and a step of obtaining a bis(fluorosulfonyl)imide salt, expressed as chemical formula (Ib) below, from the obtained ammonium bis(fluorosulfonyl)imide.

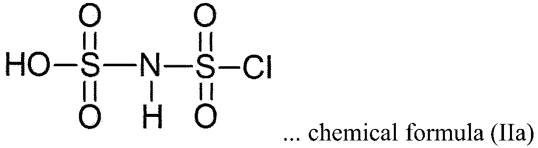

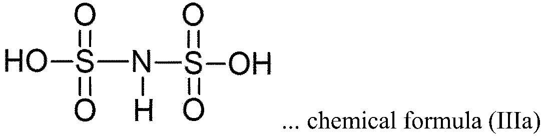

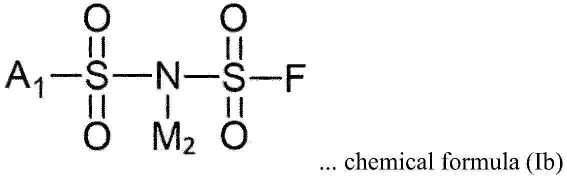

Here, A₁ can be a fluorine atom.

M₂ in chemical formula (Ib) above can be any one of NH4, Li, Na, K, Ca, Mg, Zn, Sb, Rb, and Cs.

Here, the chlorination reagent can be at least one compound selected from SOCl₂, SO₂Cl₂, COCl2, C₂O₂Cl₂, POCl₃, PCl₅, SbCl₃, ClSO₂NCO, SO₂(NCO)₂, SiCl₄, ICl, ICl₃, S₂Cl₂, SCl₂, PCl₃, COCl₂, and C₆H₅CCl₃. However, for the sake of convenience, the following descriptions use an example in which A₁ is a fluorine atom and M2 is Li. Accordingly, the following descriptions use a lithium bis(fluorosulfonyl)imide salt as an example of the bis(fluorosulfonyl)imide salt.

The reaction temperature in the step of reacting the chlorosulfonyl isocyanate (OCNSO₂Cl) with the chlorosulfonic acid (ClSO₃H) can be higher than or equal to 100 °C and lower than 150 °C. Preferably, the reaction temperature can be higher than or equal to 125 °C and lower than 135 °C. The step of reacting the chlorosulfonyl isocyanate with the chlorosulfonic acid can be performed until the production of carbon dioxide gas is ceased. This is because the ceasing of carbon dioxide gas production can be regarded as indicating the completion of the reaction, since carbon dioxide gas is produced in the step of reacting the chlorosulfonyl isocyanate with the chlorosulfonic acid.

When chlorosulfonyl isocyanate is reacted with chlorosulfonic acid, at least one of impurity 1a and impurity 2a represented in reaction formula (I) above may be produced in addition to the bis(chlorosulfonyl)imide. Impurity 1a may be H₂O₅NClS₂, expressed as chemical formula (IIa) above, and impurity 2a may be H₃O₆NS₂, expressed as chemical formula (IIIa) above. The amounts of H₂O₅NClS₂ and H₃O₆NS₂ produced as impurities may be greater than or equal to 10,000 ppm each or combined.

When a chlorination reaction occurs due to the addition of the chlorination reagent, the sulfonic acid group (-SO₃H) in the H₂O₅NClS₂ and the H₃O₆NS₂ can be converted into a chlorosulfonyl group (-SO₂Cl), and the H₂O₅NClS₂ and the H₃O₆NS₂ can be converted into bis(chlorosulfonyl)imide.

If the impurities are removed by the addition of the chlorination reagent to the bis(chlorosulfonyl)imide, the amount of impurities remaining in the lithium bis(fluorosulfonyl)imide salt ultimately prepared would also be decreased.

The impurities 1b, 2b, 3b, and 4b included in the step of obtaining the ammonium bis(fluorosulfonyl)imide salt can participate in the step of obtaining the lithium bis(fluorosulfonyl)imide salt as shown in reaction formula (IV) below, to produce impurity 1c, impurity 2c, impurity 3c, impurity 4c, and impurity 5c.

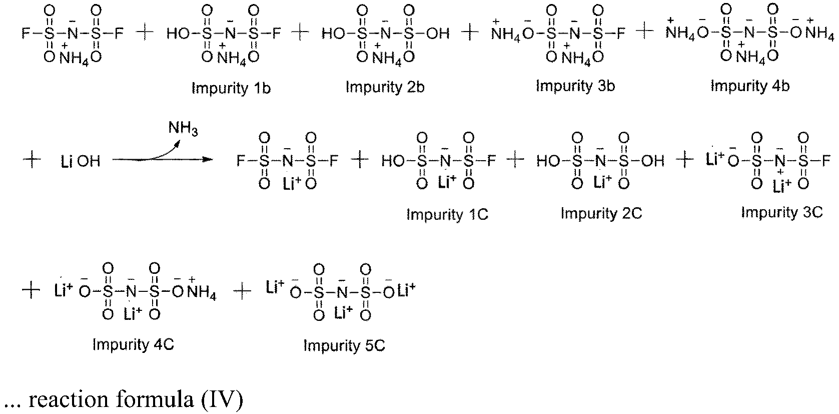

The total amount of impurity 1c and impurity 3c can be 10,000 ppm or lower, 7,100 ppm or lower, 6,300 ppm or lower, 289 ppm or lower, or 187 ppm or lower. Here, the total amount of impurity 1c and impurity 3c can be measured in the form of [NS₂O₅F]²⁻.

Also, the total amount of impurity 2C, impurity 4C, and impurity 5C can be 10,000 ppm or lower, 6,700 ppm or lower, 5,200 ppm or lower, 325 ppm or lower, or 124 ppm or lower. Here, the total amount of impurity 2C, impurity 4C, and impurity 5C can be measured in the form of [NS₂O₆]³⁻.

### <Step 1 Object>

According to an aspect of the invention, the invention relates to bis(chlorosulfonyl)imide that contains at least one of impurity H₂O₅NClS₂, expressed as chemical formula (IIa) below, in an amount of 10,000 ppm or lower and impurity H₃O₆NS₂, expressed as chemical formula (IIIa) below, in an amount of 10,000 ppm or lower.

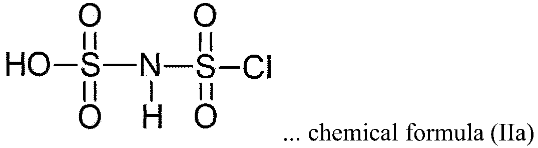

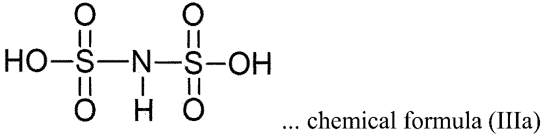

Here, adding the chlorination reagent during the preparation of the bis(chlorosulfonyl)imide can cause the amount of the H₂O₅NClS₂ to be 10,000 ppm or lower and the amount of the H₃O₆NS₂ to be 10,000 ppm or lower.

Here, the chlorination reagent can be selected from SOCl₂, SO₂Cl₂, COCl₂, C₂O₂Cl₂, POCl₃, PCl₅, SbCl₃, ClSO₂NCO, SO₂(NCO)₂, SiCl₄, ICl, ICl₃, S₂Cl₂, SCl₂, PCl₃, COCl₂, and C₆H₅CCl₃.

With the conventional method of preparing bis(chlorosulfonyl)imide, at least one of the impurity expressed as chemical formula (IIa) above and the impurity expressed as chemical formula (IIIa) above would be included. If the bis(chlorosulfonyl)imide containing these impurities is applied to the aforementioned processes of step 2 to 3, the impurities would continue to participate in subsequent reactions and thus lower the purity of the fluorosulfonylimide salt obtained as the final product. The invention therefore is to remove the impurities with a chlorination reagent after the step 1 processes are completed, thereby improving the purity of the fluorosulfonylimide salt obtained as the final product.

That is, if at least one of H₂O₅NClS₂, expressed as chemical formula (IIa) above, and H₃O₆NS₂, expressed as chemical formula (IIIa), exceed 10,000 ppm in the bis(chlorosulfonyl)imide, then these impurities may have an adverse impact on subsequent processes, causing reduced yield and producing acidic impurities. The content of the impurities can preferably be lower than or equal to 10,000ppm, and the lower limit of the impurities can be about 1 ppm.

### <Step 2 Object>

According to another aspect of the invention, the invention can provide fluorosulfonylimide expressed as chemical formula (Ia) that contains at least one of impurity [NS₂O₅F]²⁻ expressed as chemical formula (IIb) below and impurity [NS₂O₆]³⁻ expressed as chemical formula (IIIb) below, where the addition of a chlorination reagent during the preparation process causes the [NS₂O₅F]²⁻ to be 10,000 ppm or lower and the [NS₂O₆]³⁻ to be 10,000 ppm or lower.

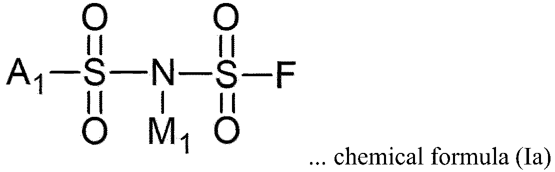

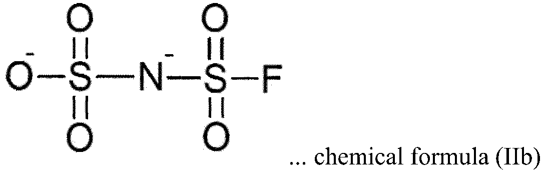

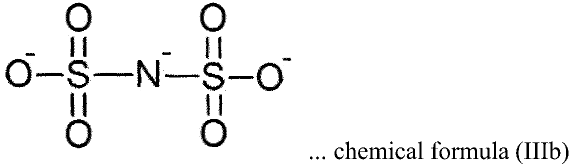

Here, M1 is H, and A1 is a fluorine atom or an alkyl group having a carbon number of 1 to 6 in which one or more hydrogen atom is substituted with a fluorine atom.

Also, the amount of [NS₂O₅F]²⁻ can be 7,100 ppm or lower, and the amount of [NS₂O₆]³⁻ can be 6,700 ppm or lower.

Also, the added chlorination reagent can be selected from SOCl₂, SO₂Cl₂, COCl₂, C₂O₂Cl₂, POCl₃, PCl₅, SbCl₃, ClSO₂NCO, SO₂(NCO)₂, SiCl₄, ICl, ICl₃, S₂Cl₂, SCl₂, PCl₃, COCl₂, and C₆H₅CCl₃.

According to another embodiment of the invention, the invention can provide a fluorosulfonylimide salt expressed as chemical formula (Ia) that contains at least one of impurity [NS₂O₅F]²⁻ expressed as chemical formula (IIb) below and impurity [NS₂O₆]³⁻ expressed as chemical formula (IIIb) below, where the addition of a chlorination reagent during the preparation process causes the [NS₂O₅F]²⁻ to be 10,000 ppm or lower and the [NS₂O₆]³⁻ to be 10,000 ppm or lower.

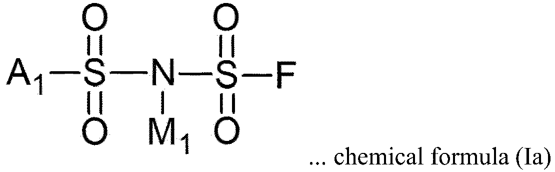

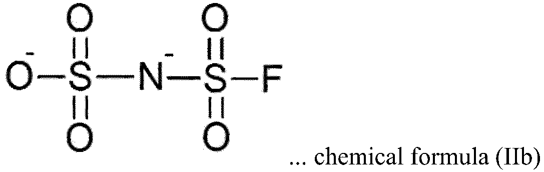

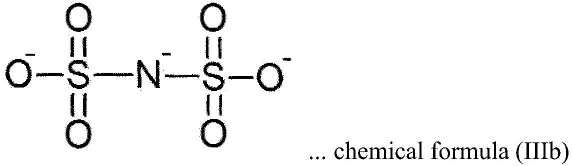

Here, A1 is a fluorine atom or an alkyl group having a carbon number of 1 to 6 in which one or more hydrogen atom is substituted with a fluorine atom, and M1 is one of NH4, Li, Na, K, Ca, Mg, Zn, Sb, Rb, and Cs.

Also, the amount of the [NS₂O₅F]²⁻ can be 7,100 ppm or lower, and the amount of the [NS₂O₆]³⁻ can be 6,700 ppm or lower.

Also, the added chlorination reagent can be selected from SOCl₂, SO₂Cl₂, COCl₂, C₂O₂Cl₂, POCl₃, PCl₅, SbCl₃, ClSO₂NCO, SO₂(NCO)₂, SiCl₄, ICl, ICl₃, S₂Cl₂, SCl₂, PCl₃, COCl₂, and C₆H₅CCl₃.

### <Step 3 Object>

A fluorosulfonylimide salt expressed as chemical formula (Ib) below that contains at least one of impurity [NS₂O₅F]²⁻ expressed as chemical formula (IIb) below and impurity [NS₂O₆]³⁻ expressed as chemical formula (IIIb) below, where the amount of [NS₂O₅F]²⁻ is 10,000 ppm or lower and the amount of [NS₂O₆]³⁻ is 10,000 ppm or lower.

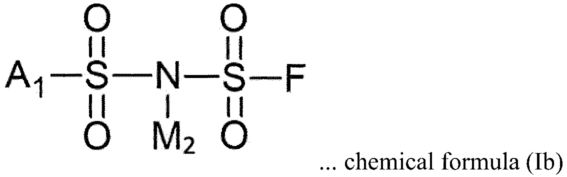

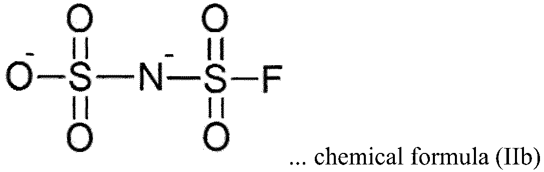

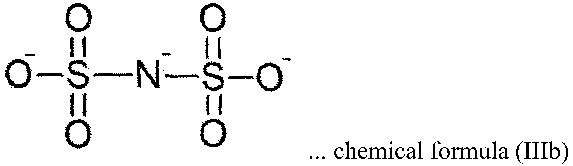

Here, also, M2 is one of Li, Na, K, Ca, Mg, Zn, Sb, Rb, and Cs.

A1 in chemical formula (Ib) above represents a fluorine atom or a hydrocarbon group having a carbon number of 1 to 6 in which one or more hydrogen atom is substituted with a fluorine atom. The hydrocarbon group is preferably a straight-chain fluoroalkyl group having a carbon number of 1 to 6. Examples of such may include fluoromethyl groups, difluoromethyl groups, trifluoromethyl groups, fluoroethyl groups, difluoroethyl groups, trifluoroethyl groups, pentafluoroethyl groups, etc. Among these, a fluorine atom, a trifluoromethyl group, and a pentafluoroethyl group are preferred as A1. The bis(fluorosulfonyl)imide or the N-(fluorosulfonyl)-N-(fluoroalkylsulfonyl)imide salt of the invention is suitable as an ion-conductive material for various electrochemical devices. In particular, lithium fluorosulfonylimide, in which the cation is lithium, is useful as an electrolyte or ionic liquid used in lithium secondary batteries, capacitors, and the like, or as an intermediate for a fluorosulfonyl compound.

Here, the amount of [NS₂O₅F]²⁻ can be 7,100 ppm or lower, 6,300 ppm or lower, 289 ppm or lower, or 187 ppm or lower. Also, the amount of [NS₂O₆]³⁻ can be 6,700 ppm or lower, 5,200 ppm or lower, 325 ppm or lower, or 124 ppm or lower.

Here, the alkali metal fluorosulfonylimide salt may have a pH of 6 or more and 9 or less in an aqueous solution state. According to another embodiment, the pH may be 6.9 or more and 7.1 or less.

Here, in cases where the fluorosulfonylimide salt is an alkali metal fluorosulfonylimide salt, the content of the impurity [NS₂O₅F]²⁻ expressed as chemical formula (IIb) and the impurity [NS₂O₆]³⁻ expressed as chemical formula (IIIb) below may be suppressed, so that the alkali metal fluorosulfonylimide salt may not exhibit acidity in an aqueous phase.

### <Electrolyte containing Step 3 Object>

According to another aspect of the invention, the invention can include an electrolyte that contains a fluorosulfonylimide salt. For example, the fluorosulfonylimide salt can be lithium bis(fluorosulfonyl)imide. In the fluorosulfonylimide salt, the content of the [NS₂O₅F]²⁻ can be 7100 ppm or lower, and the content of the [NS₂O₆]³⁻ can be 6700 ppm or lower.

The contents of the impurities [NS₂O₅F]²⁻ and [NS₂O₆]³⁻ can be measured by ion chromatography. Ion chromatography is for evaluating the types and contents of anions and cations and can be suitable for measuring the presence and contents of the ionizable [NS₂O₅F]²⁻ and [NS₂O₆]³⁻.

### <Electrochemical device (such as a battery, etc.) including Step 4 Object>

According to another aspect of the invention, the invention can be an electrochemical device that includes the electrolyte.

An electrochemical device, such as a lithium secondary battery for example, to which an electrolyte based on the invention is applied, can have the contents of the impurities [NS₂O₅F]²⁻ and [NS₂O₆]³⁻ reduced, so that the decomposition of the electrolyte and additives can be prevented and the corrosion of the current collectors can be prevented.

The following provides specific test examples and a comparative example to illustrate the superiority and originality of the invention. It should be apparent, however, that the invention is not limited to the examples introduced below.

### [Test Examples]

### [Example 1]

(Step 1 Reaction) 25.8 g of chlorosulfonic acid (ClSO₃H) was slowly added to 30 g of chlorosulfonyl isocyanate (OCNSO₂Cl), and the mixture was then stirred with a magnetic stirrer. The stirred solution was reacted for 20 hours with the temperature raised from normal temperature to 130 °C. Here, the progress of the reaction can be determined by whether or not CO₂ gas is being produced. Specifically, it can be determined that the reaction has ended if there is no more CO₂ gas being produced. Then, 2.52 g of thionyl chloride (SOCl₂) was added, and the mixture was sufficiently reacted until SO₂ gas was no longer being generated. After the reaction was completed, 44.92 g of bis(chlorosulfonyl)imide (HCSI) was obtained as a yellow liquid (yield: 99%).

(Step 2 Reaction) 120 g of butyl acetate was added to 20.76 g of ammonium fluoride (NH₄F), and the mixture was then cooled to -5 °C or lower and stirred with a magnetic stirrer. Next, 30 g of the bis(chlorosulfonyl)imide (HCSI) obtained in the previous step 1 reaction was slowly added dropwise. As heat is generated at this time, the mixture was stirred at 15 °C for about 1 hour, so that the reaction may proceed in a stable manner. After the heat generation stopped, the reaction temperature was raised to 80 °C at a heating rate of 1 °C per 1 min, and the reaction was continued for 5 hours. After the reaction was completed, the mixture was cooled to 25 °C and filtered to remove solid impurities, and the filtrate was concentrated and then recrystallized by the addition of 90 g of the non-polar solvent toluene. As a result of the recrystallization, 23.05 g of an ammonium bis(fluorosulfonyl)imide salt (NH₄FSI) was obtained as a white crystalline solid (yield: 83%).

(Step 3 Reaction) 30 g of isopropyl ether was added to 20 g of the ammonium bis(fluorosulfonyl)imide salt (NH₄FSI) obtained in the previous step 2 reaction, and the mixture was stirred with a magnetic stirrer at 25 °C. Next, 5.08 g of lithium hydroxide (LiOH·H₂O) was added and reacted for 3 hours at normal temperature. Here, the reaction can be considered to have ended when the production of NH₃ gas ceases. After the reaction was completed, the mixture was cooled to normal temperature and filtered to remove solid impurities, and the filtrate was concentrated and then recrystallized by the addition of the non-polar solvent 1,2-dichloroethane (EDC). As a result of the recrystallization, 17.18 g of lithium bis(fluorosulfonyl)imide (LiFSI) was obtained as a white crystalline solid (yield: 91%).

(Measurement) The purity, types of impurities, and impurity content of the lithium bis(fluorosulfonyl)imide obtained in the step 3 reaction for Example 1 were measured using ion chromatography.

### [Example 2]

(Step 1 Reaction) 25.8 g of chlorosulfonic acid (ClSO₃H) was slowly added to 30 g of chlorosulfonyl isocyanate (OCNSO₂Cl), and the mixture was then stirred with a magnetic stirrer. The mixture was reacted for 20 hours with the reaction temperature raised from normal temperature to 130 °C. The reaction was continued until CO₂ gas was no longer being produced. Next, 2.09 g of phosgene (COCl₂) was added, and the mixture was sufficiently reacted until CO₂ gas was no longer being produced. After the reaction was completed, 44.90 g of bis(chlorosulfonyl)imide (HCSI) was obtained as a yellow liquid (yield: 99%).

(Step 2 Reaction) In the same manner as the step 2 reaction of Example 1, the bis(chlorosulfonyl)imide obtained in the step 1 reaction was reacted to prepare an ammonium bis(fluorosulfonyl)imide salt (yield: 83%).

(Step 3 Reaction) In the same manner as the step 3 reaction of Example 1, the ammonium bis(fluorosulfonyl)imide salt obtained in the step 2 reaction was reacted to prepare lithium bis(fluorosulfonyl)imide (yield: 92%).

(Measurement) The purity, types of impurities, and impurity content of the lithium bis(fluorosulfonyl)imide obtained in the step 3 reaction of Example 2 were measured using ion chromatography.

### [Example 3]

(Step 1 Reaction) 25.8 g of chlorosulfonic acid (ClSO₃H) was slowly added to 30 g of chlorosulfonyl isocyanate (OCNSO₂Cl), and the mixture was then stirred with a magnetic stirrer. The mixture was reacted for 20 hours with the reaction temperature raised from normal temperature to 130 °C. The reaction was continued until CO₂ gas was no longer being produced. Next, 2.86 g of sulfuryl chloride (SO₂Cl₂) was added, and the mixture was sufficiently reacted until SO₃ gas was no longer being produced. After the reaction was completed, 44.45 g of bis(chlorosulfonyl)imide (HCSI) was obtained as a yellow liquid (yield: 98%).

(Step 2 Reaction) In the same manner as the step 2 reaction of Example 1, the bis(chlorosulfonyl)imide obtained in the step 1 reaction was reacted to prepare an ammonium bis(fluorosulfonyl)imide salt (yield: 85%).

(Step 3 Reaction) In the same manner as the step 3 reaction of Example 1, the ammonium bis(fluorosulfonyl)imide salt obtained in the step 2 reaction was reacted to prepare lithium bis(fluorosulfonyl)imide (yield: 92%).

(Measurement) The purity, types of impurities, and impurity content of the lithium bis(fluorosulfonyl)imide obtained in the step 3 reaction of Example 2 were measured using ion chromatography.

### [Example 4]

(Step 1 Reaction) 25.8 g of chlorosulfonic acid (ClSO₃H) was slowly added to 30 g of chlorosulfonyl isocyanate (OCNSO₂Cl), and the mixture was then stirred with a magnetic stirrer. The mixture was reacted for 20 hours with the reaction temperature raised from normal temperature to 130 °C. The reaction was continued until CO₂ gas was no longer being produced. Next, 2.69 g of oxalyl chloride (C₂O₂Cl₂) was added, and the mixture was sufficiently reacted until CO₂ and CO gases were no longer being produced. After the reaction was completed, 44.89 g of bis(chlorosulfonyl)imide (HCSI) was obtained as a yellow liquid (yield: 99%).

(Step 2 Reaction) In the same manner as the step 2 reaction of Example 1, the bis(chlorosulfonyl)imide obtained in the step 1 reaction was reacted to prepare an ammonium bis(fluorosulfonyl)imide salt (yield: 84%).

(Step 3 Reaction) In the same manner as the step 3 reaction of Example 1, the ammonium bis(fluorosulfonyl)imide salt obtained in the step 2 reaction was reacted to prepare lithium bis(fluorosulfonyl)imide (yield: 93%).

(Measurement) The purity, types of impurities, and impurity content of the lithium bis(fluorosulfonyl)imide obtained in the step 3 reaction of Example 4 were measured using ion chromatography.

### [Comparative Example]

(Step 1 Reaction) 25.8 g of chlorosulfonic acid (ClSO3H) was slowly added to 30 g of chlorosulfonyl isocyanate (OCNSO₂Cl), and the mixture was then stirred with a magnetic stirrer. The mixture was reacted for 24 hours with the reaction temperature raised from normal temperature to 130 °C until CO₂ gas was no longer being produced. After the reaction was completed, 43.09 g of bis(chlorosulfonyl)imide (HCSI) was obtained as a yellow liquid (yield: 95%).

(Step 2 Reaction) 120 g of butyl acetate was added to 20.76 g of ammonium fluoride (NH4F), and the mixture was then cooled to -5 °C or lower and stirred with a magnetic stirrer. Next, 30 g of bis(chlorosulfonyl)imide (HCSI) was slowly added dropwise. As heat is generated at this time, the mixture was stirred at 15 °C for about 1 hour, so that the reaction may proceed in a stable manner. After the heat generation stopped, the reaction temperature was raised to 80 °C, and the reaction was continued for 5 hours. After the reaction was completed, the mixture was cooled to 25 °C and filtered to remove solid impurities, and the filtrate was concentrated and then recrystallized by adding 90 g of the non-polar solvent toluene. As a result of the recrystallization, 20.27 g of an ammonium bis(fluorosulfonyl)imide salt (NH4FSI) was obtained as a white crystalline solid (yield: 73%).

(Step 3 Reaction) 30 g of isopropyl ether was added to 20 g of the ammonium bis(fluorosulfonyl)imide salt (NH4FSI) obtained in the previous step 2 reaction, and the mixture was stirred with a magnetic stirrer at 25 °C. Next, 5.08 g of a lithium hydroxide hydrate (LiOH·H2O) was added and reacted for 3 hours at 25 °C. Here, the reaction can be considered to have ended when the production of NH₃ gas ceases. After the reaction was completed, the mixture was cooled to 25 °C and filtered to remove solid impurities, and the filtrate was concentrated and then recrystallized by the addition of the non-polar solvent 1,2-dichloroethane (EDC). As a result of the recrystallization, 16.04 g of lithium bis(fluorosulfonyl)imide (LiFSI) was obtained as a white crystalline solid (yield: 85%).

### [Results]

The impurity contents of the lithium bis(fluorosulfonyl)imide (LiFSI) obtained in Examples 1 to 4 and the Comparative Example were measured using ion chromatography. The measurement results are shown in Table 1 below.

**[Table 1]**

| ID | Chlorination Reagent | [NS2O5F]²⁻ | [NS2O6]³⁻ |
|---|---|---|---|
| Example 1 | SOCl₂ | 187 ppm | 124 ppm |
| Example 2 | COCl₂ | 289 ppm | 325 ppm |
| Example 3 | SO₂Cl₂ | 7,100 ppm | 6,700 ppm |
| Example 4 | C₂O₂Cl₂ | 6,300 ppm | 5,200 ppm |
| Comparative Example | not used | 23,000 ppm | 15,000 ppm |

In addition, the purity and pH of the lithium bis(fluorosulfonyl)imide (LiFSI) obtained in Examples 1 to 4 and the Comparative Example were measured. The measurement results are shown in Table 2 below.

**[Table 2]**

| ID | Step 1 Reaction Yield (%) | Step 2 Reaction Yield (%) | Step 3 Reaction Yield (%) | LiFSI Purity (%, based on FSI anions) | pH |
|---|---|---|---|---|---|
| Example 1 | 99 | 83 | 91 | 99.5 | 7.0 |
| Example 2 | 99 | 83 | 92 | 99.6 | 7.0 |
| Example 3 | 98 | 85 | 92 | 99.7 | 6.9 |
| Example 4 | 99 | 84 | 93 | 99.6 | 6.9 |
| Comparative Example | 95 | 73 | 85 | 98.4 | 5.4 |

According to Table 2 above, in Examples 1 to 4 where chlorine substitution was performed by way of a chlorination reagent, the contents of [NS₂O₅F]²⁻ and [NS₂O₆]³⁻, which are impurities that may cause corrosion within the battery, are more suppressed compared to the Comparative Example where no chlorination reagent was used. Also, the pH measurements of 6.9 to 7.0 show neutral states. This suggests that the lithium bis(fluorosulfonyl)imide according to the invention can suppress battery corrosion when applied as a lithium salt for a battery. Furthermore, it was confirmed that in Examples 1 to 4 where chlorine substitution was performed by way of a chlorinating reagent, the yield at each reaction step was increased compared to the Comparative Example where no chlorinating reagent was used. According to the embodiments of the invention, it can be seen that Examples 1 to 4 showed high yields of 98 to 99% in the step 1 reaction yield, whereas the Comparative Example showed a relatively low yield of 95% due to the generation of impurities.

The step 2 reaction yields in Table 2 were calculated based on the molecular numbers of the ammonium bis(fluorosulfonyl)imide salt produced relative to the bis(chlorosulfonyl)imide added in the step 2 reaction of each Example and Comparative Example. Examples 1 to 4 showed step 2 reaction yields of 83 to 85%, whereas Comparative Example 1 showed a step 2 reaction yield of 73%. This is presumed to be because the impurities interfere with the reaction between bis(chlorosulfonyl)imide and ammonium fluoride and directly react with the ammonium fluoride to produce other impurities.

The step 3 reaction yields in Table 2 were calculated based on the molecular numbers of the lithium bis(fluorosulfonyl)imide salt produced relative to the ammonium bis(fluorosulfonyl)imide salt added in the step 3 reaction of each Example and Comparative Example. Examples 1 to 4 showed step 3 reaction yields of 91 to 93%, whereas the Comparative Example showed a step 3 reaction yield of 85%. This is presumed to be because the impurities added together in step 3 of the Comparative Example interfere with the reaction between the ammonium bis(fluorosulfonyl)imide salt and lithium hydroxide and directly react with the lithium hydroxide to produce impurities in the final step.

Table 2 above shows the purity of the finally produced lithium bis(fluorosulfonyl)imide salts, which were measured based on the fluorosulfonyl imide ions. Examples 1 to 4 showed high purity levels of 99.5 to 99.7%, whereas the Comparative Example showed a relatively low purity level of 98.4%. When the purity is low in this manner, there is a risk that the performance of the battery may be degraded.

The preferred embodiments of the invention provided above are disclosed for illustrative purposes only. It should be appreciated that the skilled person having ordinary skill in regard to the present invention would be able to make various modifications, alterations, and additions without departing from the spirit and scope of the present invention and that such modifications, alterations, and additions are encompassed within the scope of claims below.

## Claims

1. A bis(chlorosulfonyl)imide containing at least one of an impurity H₂O₅NClS₂ expressed as chemical formula (IIa) below in an amount of 10,000 ppm or lower and an impurity H₃O₆NS₂ expressed as chemical formula (IIIa) below in an amount of 10,000 ppm or lower:

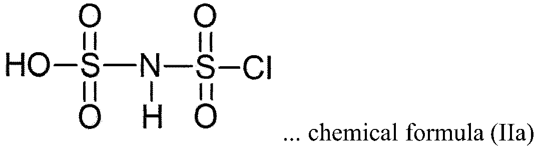

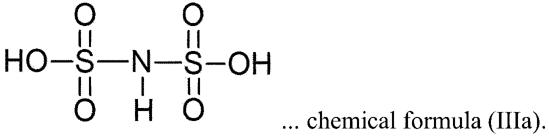

2. The bis(chlorosulfonyl)imide of claim 1, wherein an adding of a chlorination reagent during a preparation of the bis(chlorosulfonyl)imide causes the amount of the H₂O₅NClS₂ to become 10,000 ppm or lower and the amount of the H₃O₆NS₂ to become 10,000 ppm or lower.

3. The bis(chlorosulfonyl)imide of claim 2, wherein the amount of the H₂O₅NClS₂ is 7,100 ppm or lower, and the amount of the H₃O₆NS₂ is 6,700 ppm or lower.

4. The bis(chlorosulfonyl)imide of claim 2, wherein the chlorination reagent comprises at least one compound selected from SOCl₂, SO₂Cl₂, COCl₂, C₂O₂Cl₂, POCl₃, PCl₅, SbCl₃, ClSO₂NCO, SO₂(NCO)₂, SiCl₄, ICl, ICl₃, S₂Cl₂, SCl₂, PCl₃, COCl₂, and C₆H₅CCl₃.

5. A fluorosulfonylimide expressed as chemical formula (Ia) containing at least one of an impurity [NS₂O₅F]²⁻ expressed as chemical formula (IIb) below and an impurity [NS₂O₆]³⁻expressed as chemical formula (IIIb) below: 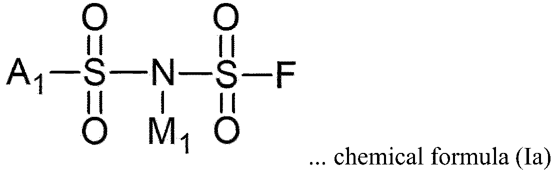 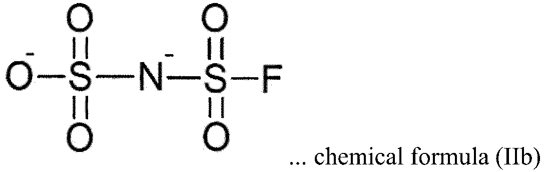 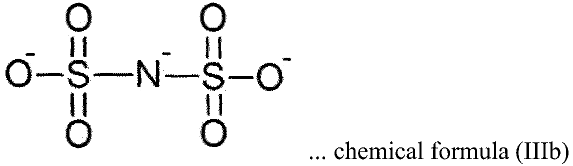 (wherein, in the chemical formula (Ia) above,
M1 is H, and
A1 is a fluoride atom or an alkyl group having a carbon number of 1 to 6 in which one or more hydrogen atom is substituted with a fluorine atom,)
wherein an adding of a chlorination reagent during preparation causes an amount of the [NS₂O₅F]²⁻ to become 10,000 ppm or lower and an amount of the [NS₂O₆]³⁻ to become 10,000 ppm or lower.

6. The fluorosulfonylimide of claim 5, wherein the amount of the [NS₂O₅F]²⁻ is 7,100 ppm or lower, and the amount of the [NS₂O₆]³⁻ is 6,700 ppm or lower.

7. A fluorosulfonylimide salt expressed as chemical formula (Ia) containing at least one of an impurity [NS₂O₅F]²⁻ expressed as chemical formula (IIb) below and an impurity [NS₂O₆]³⁻expressed as chemical formula (IIIb) below: 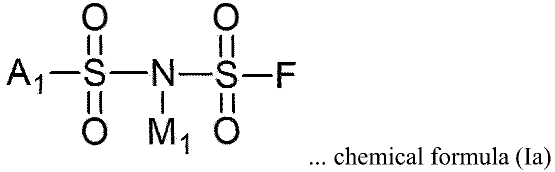 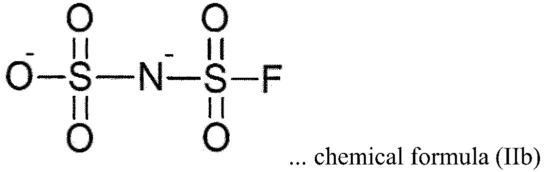 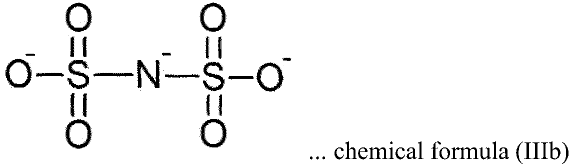 (wherein, in the chemical formula (Ia) above,
M1 is any one of NH4, Li, Na, K, Ca, Mg, Zn, Sb, Rb, and Cs, and
A1 is a fluoride atom or an alkyl group having a carbon number of 1 to 6 in which one or more hydrogen atom is substituted with a fluorine atom,)
wherein an adding of a chlorination reagent during preparation causes an amount of the [NS₂O₅F]²⁻ to become 10,000 ppm or lower and an amount of the [NS₂O₆]³⁻ to become 10,000 ppm or lower.

8. The fluorosulfonylimide salt of claim 7, wherein the amount of the [NS₂O₅F]²⁻ is 7,100 ppm or lower, and the amount of the [NS₂O₆]³⁻ is 6,700 ppm or lower.

9. A fluorosulfonylimide salt expressed as chemical formula (Ib) containing at least one of an impurity [NS₂O₅F]²⁻ expressed as chemical formula (IIb) below and an impurity [NS₂O₆]³⁻expressed as chemical formula (IIIb) below: 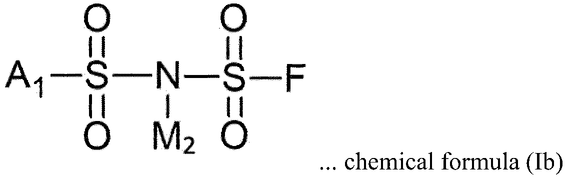 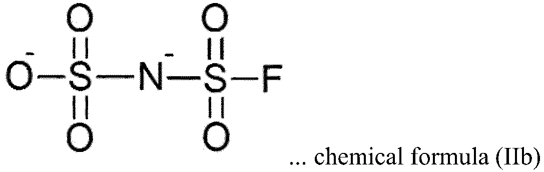 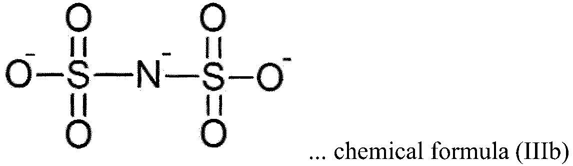 (wherein, in the chemical formula (Ib) above,
M2 is any one of Li, Na, K, Ca, Mg, Zn, Sb, Rb, and Cs, and
A1 is a fluoride atom or an alkyl group having a carbon number of 1 to 6 in which one or more hydrogen atom is substituted with a fluorine atom,)
wherein an amount of the [NS₂O₅F]²⁻ is 10,000 ppm or lower and an amount of the [NS₂O₆]³⁻ is 10,000 ppm or lower.

10. The fluorosulfonylimide salt expressed as chemical formula (Ib) according to claim 9, wherein the amount of the [NS₂O₅F]²⁻ is 7,100 ppm or lower, and the amount of the [NS₂O₆]³⁻is 6,700 ppm or lower.

11. The fluorosulfonylimide salt expressed as chemical formula (Ib) according to claim 10, wherein the amount of the [NS₂O₅F]²⁻ is 6,300 ppm or lower, and the amount of the [NS₂O₆]³⁻ is 5,200 ppm or lower.

12. The fluorosulfonylimide salt expressed as chemical formula (Ib) according to claim 11, wherein the amount of the [NS₂O₅F]²⁻ is 289 ppm or lower, and the amount of the [NS₂O₆]³⁻is 325 ppm or lower.

13. The fluorosulfonylimide salt expressed as chemical formula (Ib) according to claim 12, wherein the amount of the [NS₂O₅F]²⁻ is 187 ppm or lower, and the amount of the [NS₂O₆]³⁻is 124 ppm or lower.

14. The fluorosulfonylimide salt of claim 9 having a pH of 6 or higher and 9 or lower in an aqueous state.

15. An electrolyte containing the fluorosulfonylimide or the fluorosulfonylimide salt disclosed in any one of claim 5 to claim 14.

16. An electrochemical device including the electrolyte disclosed in claim 15.

17. A method of preparing bis(chlorosulfonyl)imide, the method comprising:
reacting chlorosulfonyl isocyanate with chlorosulfonic acid; and
adding a chlorination reagent to a product of the reaction.

18. The method of preparing bis(chlorosulfonyl)imide according to claim 17, wherein the product of the reaction contains at least one of an impurity H₂O₅NClS₂ expressed as chemical formula (IIa) below and an impurity H₃O₆NS₂ expressed as chemical formula (IIIa) below: 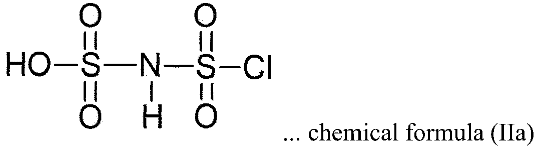 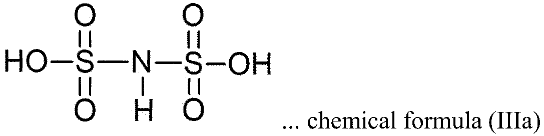 wherein the adding of the chlorination reagent comprises removing impurities contained in the product of the reaction.

19. The method of preparing bis(chlorosulfonyl)imide according to claim 18, wherein, as a result of the removing of the impurities, the H₂O₅NClS₂ remains in an amount of 10,000 ppm or lower and the H₃O₆NS₂ remains in an amount of 10,000 ppm or lower in the bis(chlorosulfonyl)imide.

20. The method of preparing bis(chlorosulfonyl)imide according to claim 19, wherein, as a result of the removing of the impurities, the H₂O₅NClS₂ remains in an amount of 7,100 ppm or lower and the H₃O₆NS₂ remains in an amount of 6,700 ppm or lower in the bis(chlorosulfonyl)imide.

21. The method of preparing bis(chlorosulfonyl)imide according to claim 17, wherein the chlorination reagent comprises at least one compound selected from SOCl₂, SO₂Cl₂, COCl2, C₂O₂Cl₂, POCl₃, PCl₅, SbCl₃, ClSO₂NCO, SO₂(NCO)₂, SiCl₄, ICl, ICl₃, S₂Cl₂, SCl₂, PCl₃, COCl₂, and C₆H₅CCl₃.

22. A method of preparing a fluorosulfonylimide salt expressed as chemical formula (Ia): 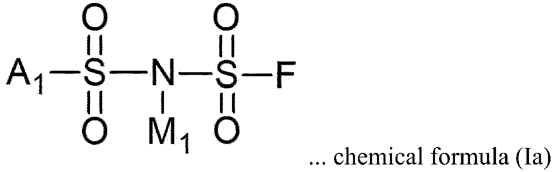
(wherein, in the chemical formula (Ia) above, M1 is any one of NH4, Li, Na, K, Ca, Mg, Zn, Sb, Rb, and Cs, and A1 is a fluoride atom)
wherein the method comprises:
obtaining bis(chlorosulfonyl)imide containing at least one of impurities H2O₅NClS₂ and H₃O₆NS₂ by reacting chlorosulfonyl isocyanate with chlorosulfonic acid;
removing the impurities by adding a chlorination reagent to the bis(chlorosulfonyl)imide; and
adding butyl acetate to a fluorine compound and stirring, and then adding the bis(chlorosulfonyl)imide from which the impurities have been removed.

23. A method of preparing a bis(fluorosulfonyl)imide salt, the method comprising:
obtaining bis(chlorosulfonyl)imide containing at least one of impurities H₂O₅NClS₂ expressed as chemical formula (IIa) below and H₃O₆NS₂ expressed as chemical formula (IIIa) below by reacting chlorosulfonyl isocyanate with chlorosulfonic acid;
removing the impurities by adding a chlorination reagent to the bis(chlorosulfonyl)imide;
obtaining an ammonium bis(fluorosulfonyl)imide salt from the bis(chlorosulfonyl)imide from which the impurities have been removed; and
obtaining a bis(chlorosulfonyl)imide salt expressed as chemical formula (Ib) below from the obtained ammonium bis(fluorosulfonyl)imide, 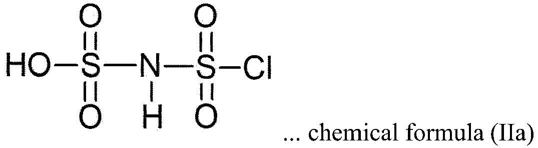 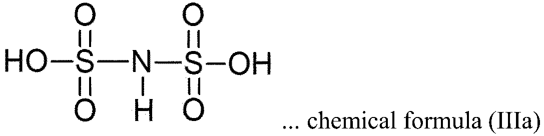 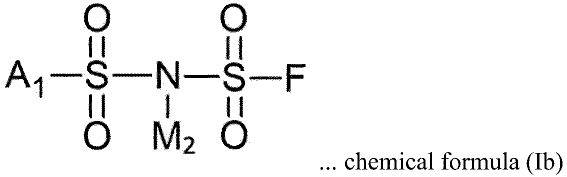
(wherein, in the chemical formula (Ib) above,
M2 is any one of Li, Na, K, Ca, Mg, Zn, Sb, Rb, and Cs, and
A1 is a fluoride atom).

24. The method of preparing a bis(fluorosulfonyl)imide salt according to claim 23, wherein the obtained bis(fluorosulfonyl)imide salt contains at least one of an impurity [NS₂O₅F]²⁻ expressed as chemical formula (IIb) below and an impurity [NS₂O₆]³⁻ expressed as chemical formula (IIIb) below: 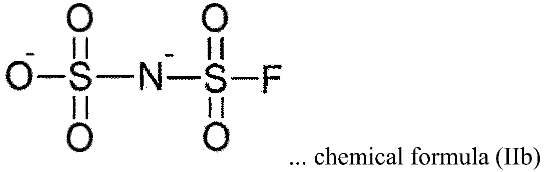 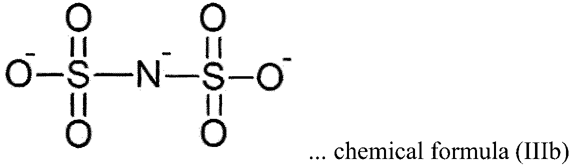 wherein an amount of the [NS₂O₅F]²⁻ is 10,000 ppm or lower and an amount of the [NS₂O₆]³⁻ is 10,000 ppm or lower.

25. The method of preparing a bis(fluorosulfonyl)imide salt according to claim 24, wherein the amount of the [NS₂O₅F]²⁻ is 7,100 ppm or lower, and the amount of the [NS₂O₆]³⁻ is 6,700 ppm or lower.

26. The method of preparing a bis(fluorosulfonyl)imide salt according to claim 23, wherein the bis(fluorosulfonyl)imide salt has a pH of 6 or higher and 9 or lower in an aqueous state.

27. The method of preparing a bis(fluorosulfonyl)imide salt according to claim 23, wherein the chlorination reagent is at least compound selected from SOCl₂, SO₂Cl₂, COCl₂, C₂O₂Cl₂, POCl₃, PCl₅, SbCl₃, ClSO₂NCO, SO₂(NCO)₂, SiCl₄, ICl, ICl₃, S₂Cl₂, SCl₂, PCl₃, COCl₂, and C₆H₅CCl₃.
